# EUROPEAN PATENT APPLICATION

(11) **EP 3 499 835 A1**
(43) Date of publication of application: **19.06.2019**
(21) Application number: 17207151.6
(22) Date of filing: 13.12.2017
(51) Int. Cl.: H04L 29/06, H04L 12/26

(54) **DATA PROCESSING APPARATUS, METHOD, AND PROGRAM, FOR HANDLING DATA STREAMS IN A DATA COMMUNICATIONS NETWORK**

(71) Applicant: FUJITSU LIMITED, Kanagawa 211-8588 (JP)
(72) Inventor: WILSON, Mick, Romsey, Hampshire SO51 5RW (GB)
(74) Representative: Haseltine Lake Kempner LLP

(57) **Abstract**

Embodiments include a data processing apparatus in a data communications network, the data processing apparatus being configured to perform a data input process. The data input process comprises receiving, via the data communications network, an input data stream from a data source, the input data stream comprising a first sequence of data units encoding audio visual content; upon receipt of each data unit among the first sequence of data units, assigning an identifying label to the data unit, and recording a time of receipt of the data unit, the record of the time of receipt of the data unit being associated with the assigned identifying label. The data processing apparatus hosts an instance of a data processing service, the data processing service being configured to generate an output data stream corresponding to the input data stream, the output data stream comprising a second sequence of data units each representing the audio visual content encoded by a corresponding data unit from the input data stream, and being labelled with the identifier of the corresponding input data unit. The data processing apparatus is further configured to perform a data output process, comprising: transmitting the output data stream to a user equipment via the data communication network; and if an elapsed time between the recorded time of receipt of the data unit and time of transmission of the data unit for one data unit, or a representation of said elapsed time for a succession of data units in the output data stream, is outside of a target range for the output data stream, notifying a management entity of the data communications network that the target is missed.

## Description

This invention lies in the field of audio visual data transmission, and specifically relates to the management of latency times in data communications networks that support augmented reality services for audio visual data.

New data communications networks such as 5G networks are promising reduction in latencies at least over the radio interface, which is driving innovation in a new range of applications that demand low end to end latency. Although not limited to 5G nor limited to mobile networks, applications such as augmented reality, virtual reality, and real-time gaming will create a new generation of user applications in future networks.

The end-to-end latency, from a data source to a data consumer, or user equipment, may be considered as a concatenation of different budget allocations over a number of path segments that constitute the end-to-end service. For example, a camera attached to a cellular network provides an augmented reality service to a UE also attached to the cellular network. The camera and the UE are attached to an edge service, for example, via a base station, that performs the video analytics and incorporates the results into the video output to the UE(s) as required.

In general the latency measurements for the different network links are well documented by prior art and standardisation (e.g. based on the time to receive acknowledgments for previous transmitted packets/frames). Such techniques may be applied to cover latency times between a data source and a network element providing an augmented reality service, and between said network element and the user equipment. However it is desirable to provide a measurement of the end-to-end latency experienced by the end users. The traditional network approaches assume a single flow between the originating end user node and the terminating end user node.

Embodiments include a data processing apparatus in a data communications network, the data processing apparatus being configured to: perform a data input process, comprising: receiving, via the data communications network, an input data stream from a data source, the input data stream comprising a first sequence of data units encoding audio visual content; upon receipt of each data unit among the first sequence of data units, assigning an identifying label to the data unit, and recording a time of receipt of the data unit, the record of the time of receipt of the data unit being associated with the assigned identifying label; the data processing apparatus hosting an instance of a data processing service, the data processing service being configured to generate an output data stream corresponding to the input data stream, the output data stream comprising a second sequence of data units each representing the audio visual content encoded by a corresponding data unit from the input data stream, and being labelled with the identifier of the corresponding input data unit; the data processing apparatus being further configured to perform a data output process, comprising: transmitting the output data stream to a user equipment via the data communication network; and if an elapsed time between the recorded time of receipt of the data unit and time of transmission of the data unit for one data unit, or a representation of said elapsed time for a succession of data units in the output data stream, is outside of a target range for the output data stream, notifying a management entity of the data communications network that the target is missed.

Embodiments provide means to calculate and report the latency contribution to end-to-end latency caused by the data processing service in an audio-visual data streaming and processing service. Techniques exist for reporting the latency contribution caused in the transmission of data between entities. Embodiments measure the latency at a particular entity that performs a processing function on the audio visual data.

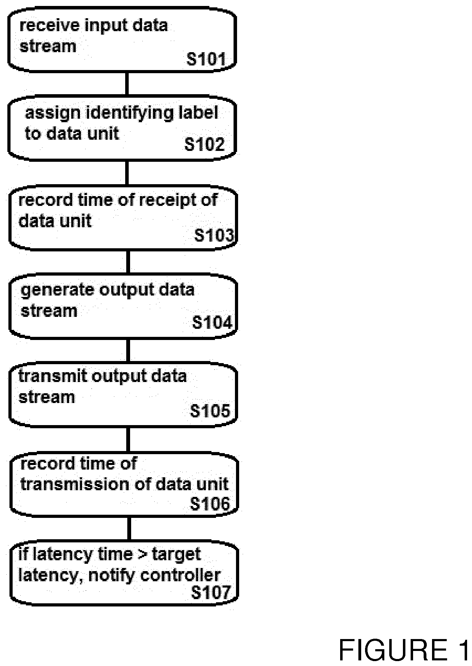

Embodiments focus on Network Functions applied to streams of data subject to a data processing service, such as video analytics for applications providing augmented reality, which stream demands a low end-to-end latency. Figure 1 shows such an application taking data from the video source (camera 10) and providing a real time stream to a user equipment 60 via a network based video analytics function 30. Embodiments provide a means to measure a transit delay across a video analytics network based function typically running on a cloud infrastructure or potentially on a server located at the edge of a network (close to the access point/base station).

Practically such a network function will support multiple inputs (e.g. from different video sources) and multiple outputs to consumers of each of the video streams with enhancements by the Augmented Reality Edge Service. As indicated in figure 1 some streams may have multiple consumers (video stream 1) and some with no consumers (video stream 2).

5G Networks are expected to be highlight flexible and to have a high dependency on software components based on a virtualised infrastructure (so called softwarisation of 5G networks). In order to ensure the KPIs necessary to meet the user expectations, the network based functions need to be managed close to real time and in the cases where KPIs are not met, additional resources (bandwidth and/or processing) may be allocated dynamically (through management entities such as so Network Function Orchestration).

The assigning an identifying label to the data unit is a step of attributing a code, symbol, number, or some other form of identifying information, to the data unit which enables the data unit to be identified among other data units being processed contemporaneously by the data processing apparatus. That is to say, the identifying label is unique among identifying labels assigned to data units being processed by (i.e. that have been received from the data source and not yet transmitted to the user equipment) the data processing apparatus at the same time as (i.e. temporally overlapping). The assigned identifying label may be physically stored with the data unit as a kind of metadata field as the data unit is processed by the data processing apparatus.

The data processing service may be an application that launches one instance per input data stream, and user equipments subscribe to the instance. Alternatively, the data processing service may be individualised per user equipment, and so it may be that one instance of the data processing service is launched per user equipment, each instance generating an individual output data stream. Whatever the configuration, each instance of the data processing service is on a path between a different combination of data source and user equipments.

How the elapsed time is calculate dis implementation-specific. The association of the record of time of arrival with the assigned identifying label which remains with the data unit after processing enables residence time on the data processing apparatus to be measured for audio visual content. In a particular example: the output process further includes recording a time of transmission of the data unit, the record of the time of transmission of the data unit being associated with the identifier with which the data unit is labelled.

Advantageously, the explicit recording of the transmission time enables the precise elapsed time for one data unit or for a series of data units to be recorded. This enables the data processing apparatus to calculate values, such as total or mean, representing multiple successive elapsed times for data units in the output data stream, for comparison with target ranges for those calculated values. Failure to meet target ranges triggers a notification to he latency management entity.

As an alternative: the time of receipt is recorded by starting a timer associated with the assigned identifying label, the timer being configured to expire upon running for a finite period of time, less than or equal to the finite period of time being the target range for the output data stream; and if the data unit of the output stream assigned the identifying label is transmitted by the data processing apparatus before expiry of the timer, the timer is stopped, and if the timer expires before it is stopped, a notification that the target range is missed for the data unit is transmitted to the management entity.

Advantageously, the notifications may be received by the latency management entity even before transmission of the data units by the data processing apparatus. The management entity is able to monitor in realtime when the target range is not being satisfied, and to control processing resource allocation on the data processing apparatus accordingly. For example, if the frequency of notifications exceeds a threshold (frequency being notifications per second or notifications per data unit in the output data stream) then the management entity increases an allocation of processing resources for the instance of the data processing service generating the output data stream.

The data processing apparatus is configured to process a plurality of input data streams concurrently, and to provide a plurality of output data streams concurrently. Multiple instances of the data processing service may be hosted by the data processing apparatus, each generating a different output data stream.

In a particular example, the data processing apparatus is configured to: perform the data input process for each of a plurality of input data streams, concurrently; perform the data output process for each of a plurality of output data streams, concurrently, each of the output data streams corresponding to one of the plurality of input data streams; launch and host an instance of the data processing service for each of the plurality of output data streams.

When multiple instances of the data processing service are running, it may be desirable to control the resources allocated to each. Such control may be performed based on the notifications that target ranges for elapsed time are not being met, for example: the data processing apparatus is configured to host the instance of the data processing service, or each of the instances of the data processing service, with an allocated portion of configurable computer hardware resources shared between a plurality of said instances, the portion being determined according to an instruction issued by the management entity, and wherein the instruction from the management entity is issued as a response to the notification that the target is missed.

Wherein the portion may be a proportion of available processor cores, and may be a specified subset of the available processor cores. Advantageously, such embodiments enable resources to be allocated to processing service instances that are missing target times for data unit residence so that the latency may be reduced.

The management entity may be remote from the data processing apparatus, or may be hosted by the data processing apparatus. The management entity controls latency of data units by receiving the notifications of target ranges being missed, and allocating computing resources to instances of the data processing service according to the notifications according to the notifications (in simple terms, more notifications from an output data stream, allocate more processing resources to the service generating said output data stream).

For example, the management entity is configured to: store, for the output data stream or for each output data stream, a latency target range for processing by the data processing apparatus; to notify the data processing apparatus of the latency target range for the output data stream in advance of transmission of the output data stream to the user equipment by the data processing apparatus; receive, from the data processing apparatus, a notification that the latency target range is missed for a data unit or for a succession of data units in the output data stream; respond by increasing a number of processor cores, or average processing power per processor core, of the data processing apparatus computing resources allocated to the instance of the data processing service generating the output data stream.

In a more complex example, the management entity may also take into account a number of user equipments subscribing to, or otherwise receiving, the output data stream.

The data communications network may be a cellular network such as a 5G, LTE, or LTE-A network. In a particular example, the data communication network comprises a radio interface, and the data source or each of the data sources is in data communication with the data processing apparatus over a connection path including a radio link between the data source and a base station, and a wired or wireless link between the base station and the data processing apparatus, and the user equipment or each of the user equipments is in data communication with the data processing apparatus over a connection path including a radio link between the user equipment and a base station, and a wired or wireless link between the base station and the data processing apparatus.

Meeting latency targets for interfaces between network elements is a key focus in network design. Advantageously, embodiments complement such network design with the ability to monitor and manage latency in data processing apparatus within a network.

Optionally, each of the input data streams is the corresponding input data stream for a number of the output data streams, and the management entity is configured, in response to a report that the target is missed for an output data stream, to identify the input data stream corresponding to the output data stream and the number of output data streams to which the input data stream corresponds, and to determine whether there is an input data stream among the plurality of input data streams that corresponds to a number of output data streams that is lower than the identified number, and if so, to re-allocate configurable hardware resources from instances of the data processing service corresponding to the determined input data stream to instances of the data processing service corresponding to the identified data stream.

Advantageously, such embodiments enable the management entity to prioritise popular output data streams when allocating resources to instances of the data processing service. In addition to processor cores, it may be that other computer resources such as volatile memory space and data I/O bandwidth are configurable by the management entity in the same way.

Interfaces between different network elements may use different technologies to exchange data and in particular may package data into differently-sized units. For example: the sequence of data units is a sequence of service data units each composed of data received at the data processing apparatus from the data source in a plurality of data packets, and transmitted from the data processing apparatus to the user equipment in a plurality of data packets; the time of receipt of the service data unit is recorded as the earliest time at which the service data unit is completely received at the data processing apparatus, or the earliest time at which the service data unit arrives for processing at the data processing service; and the time of transmission of the service data unit is recorded as either the earliest time at which the service data unit is completely transmitted from the data processing apparatus, or the earliest time at which any data packet composing the service data unit is transmitted from the data processing apparatus.

A service data unit may comprise the audio visual content of a single video frame. Advantageously, such embodiments enable standard video processing services to operate in conjunction with standard GTP/IP network entities.

Embodiments of another aspect include: a method in a data communications network, the method comprising: a data input process, comprising receiving, via the data communication network, an input data stream from a data source, the input data stream comprising a first sequence of data units encoding audio visual content, and upon receipt of each data unit among the sequence of data units, assigning an identifying label to the data unit, and recording a time of receipt of the data unit, the record of the time of receipt of the data unit being associated with the assigned identifying label. The method further comprising: hosting an instance of a data processing service, the data processing service being configured to generate an output data stream corresponding to the input data stream, the output data stream comprising a second sequence of data units each representing the audio visual content encoded by a corresponding data unit from the input data stream, and being labelled with the identifier of the corresponding input data unit; and a data output process, comprising transmitting the output data stream to a user equipment via the data communication network; and if an elapsed time between the recorded time of receipt of the data unit and time of transmission of the data unit for one data unit, or a representation of said elapsed time for a succession of data units in the output data stream, is outside of a target range for the output data stream, notifying a management entity of the data communications network that the target is missed.

Embodiments also software, such as a computer program which, when executed by a data processing apparatus in a data communications network, causes the data processing apparatus to perform a method of an embodiment.

### DETAILED DESCRIPTION

Examples of embodiments will now be set out, with reference to the accompanying drawings, in which:
Figure 1 illustrates a method of an embodiment;
Figure 2 illustrates an exemplary data communications network architecture of an embodiment;
Figure 3 illustrates another exemplary data communications network architecture of an embodiment;
Figure 4 illustrates some signalling between network entities of an embodiment; and
Figure 5 is an exemplary hardware configuration of a data processing apparatus of an embodiment.

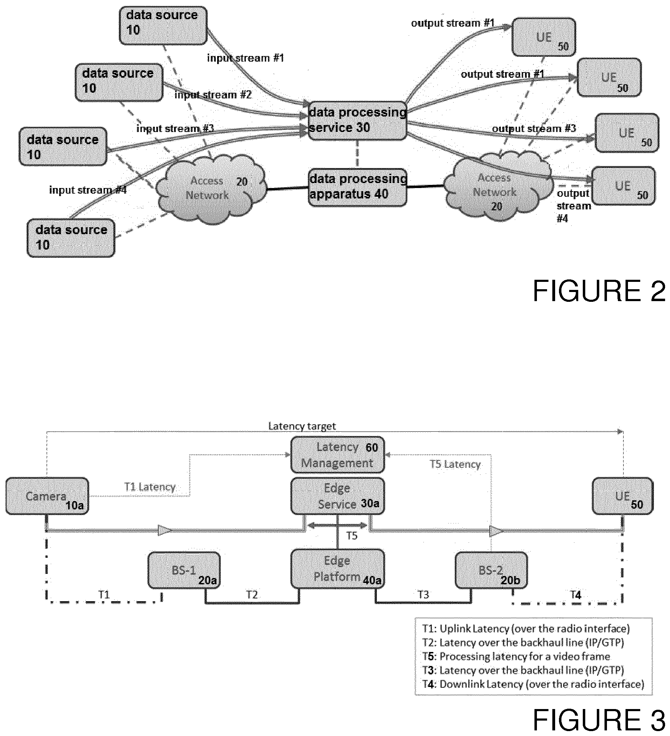

Figure 1 illustrates a method of an embodiment. It is noted that many of the steps are performed on a per data unit basis, and so each step is performed multiple times for a single data stream, and that the steps run concurrently for different data units, so that one step may be performed while another is also being performed. The method is performed by a data processing apparatus in a data communications network, as illustrated in Figure 2. The data processing apparatus 40 may be an edge server in the data communications network. The data processing apparatus 40 may be a plurality of interconnected edge servers in the data communications network. The data processing apparatus 40 may be a cloud computing apparatus, comprising configurable resources for shared use between a plurality of service users.

The data communications network also includes data sources 10, an access network 20 which is a plurality of access points, a data processing service 30 which is an application or program running on the data processing apparatus 40, and user equipments 50. The data sources 10 may be, for example, cameras, so that the input data streams are streams of video data, and the data processing service 30 is an augmented reality service which generates enhanced/embellished/augmented video data based on the input video data. The user equipments 50 each comprise a video display.

In Figure 2 the solid lines connecting data sources directly to the data processing service 30 represent an input data flow in a conceptual manner, but do not represent the physical path of the input data flow, the physical path being from the data source 10 to the data processing apparatus 40 via the access network 20. Similarly, the solid lines connecting the data processing service 30 directly to the user equipments 50 represent an output data flow in a conceptual manner, but do not represent the physical path of the output data flow, the physical path being from the data processing apparatus 40 to the user equipments 50 via the access network 20.

At step S101 an input data stream is received by the data processing apparatus 40. The input data stream is received from a data source 10 via the data communications network. The input data stream comprises a sequence of data units encoding audio visual content. The data source 10 may be, for example, a camera, a microphone, or a camera with integrated or associated microphone. The data source 10 may be, for example, a computing device running a gaming application. The audio visual content may be video content, audio content, or video content with integrated or associated audio content. Alternatively, the data source 10 may be a data storage unit storing previously obtained audio visual content.

The data source 10 is a member of the data communications network and is in data communication with an access point 20, such as a base station, over an interface, such as a radio interface. The data processing apparatus 40 receives the input data stream, directly or indirectly, from the access point 20. The data processing apparatus 40 may have a backhaul or wired connection to the access point 20, over which connection the input data stream is received by the data processing apparatus 40.

The data communications network comprises means for measuring the latency in transmitting data units from the data source 10 to the data processing apparatus 40, and means for reporting the measured latency to a management entity. Similarly, the data communications network comprises means for measuring the latency in transmitting data units from the data processing apparatus 40 to the user equipment 50 and means for reporting the measured latency to a management entity.

The input data stream is transmitted as a series of data packets, which comprise some audio visual content and some control or meta data. Data packets may comprise only control or meta data. A single data unit may comprise the audio visual content included in a single data packet, or, it may be formed of the audio visual content from a plurality of data packets. Similarly, the meta data in a data unit may be formed of the control or meta data from a single data packet or from a plurality of data packets. In the case of both the audio visual content and the meta data, some processing may be executed upon receipt at the data processing apparatus, for example, to alter the formatting, structure, or encoding of the data. The data units as which the audio visual content is processed by the data processing apparatus may be, for example, service data units, which may be a video frame for video data.

At step S102, an identifying label is assigned to each of the data units in the input data stream. The assigning is performed once the complete data unit is received at the data processing apparatus 40, noting that the data unit may be composed of audio visual content and/or metadata from a plurality of data packets. The label may be a code, symbol, number, or some other form of identifying information that uniquely identifies the data unit among data units present on (i.e. being processed by) the data processing apparatus 40 at the same time. Once a data unit has been transmitted from the data processing apparatus to the user equipment, the identifying label may be recycled for a new data unit. The identifying label may be structured in a manner which identifies, for example, one or both of the data source 10 from which the audio visual content in the data unit was recorded, and the user equipment 50 to which the audio visual content is being transmitted once processed. The identifying label may be physically stored and processed with the audio visual content of the data unit during its time at the data processing apparatus 40 (i.e. the time between being received by, and transmitted from, the data processing apparatus 40). The identifying label may be considered to be an item of metadata.

At step S103 a record is made of the time of receipt of the data unit, the recorded time being associated with the identifying label. For example, said association may be as a link between linked data items, or as entries in the same row of a table or relational database. The recorded time is the earliest time at which the data unit was present in its entirety on the data processing apparatus 40. The time may be recorded by reading a time from a system clock, and storing the reading in association with the identifying label. Alternatively, the time may be recorded by starting a timer associated with the identifying label at the time of receipt.

At step S104, the data processing apparatus 40 launches an instance of a data processing service 30 to generate an output data stream corresponding to the input data stream. The input data stream may be considered to comprise a first sequence of data units, and the output data stream may be considered to comprise a second sequence of data units. Each data unit in the second sequence of data units represents the audio visual content encoded by a corresponding data unit from the first sequence of data units, and is labelled with the same identifying label assigned to said corresponding data unit from the first sequence of data units. The data processing service 30 may alter the audio visual content in some way, for example, by augmenting/embellishing/enhancing with additional information, so that the data unit is modified, and hence the data units in the output data stream are considered to correspond to data units in the input data stream, rather than being considered to be the same data unit.

The data processing service 30 may be an augmented reality service that enhances audio visual content with additional information, for example, retrieved from a data store at the data processing apparatus 40 or accessible to the data processing apparatus 40 over the internet. Alternatively, the data processing service 30 may conduct calculations or other processing based on the audio visual content, with the results of the calculations or other processing either being displayed as an augmentation to the audio visual content, or used as a key to retrieve additional information from a data store with which to augment the audio visual content.

The data processing service 30 may be instantiated multiple times simultaneously, with a portion of processing resources allocated to each instance. A network management entity, hosted by the data processing apparatus 40, may control the processing power (i.e. the number of, and processing capability of, processing cores) allocated to each instance.

At step S105 the sequence of data units generated by the data processing service 30 are transmitted to the user equipment 50 via the data communication network, specifically via an access point in the access network 20. The user equipment is a subscriber station in the data communications network and is downloading the output data stream from the data processing apparatus 40. For example, the user equipment may have previously submitted a request for the output data stream, or more specifically may have requested a stream of processed audio visual data from the data processing service 30, which request may have specified a particular data source 10.

The connection between the data processing apparatus 40 and the access point may be a backhaul or wired connection. The connection between the access point and the user equipment may be, for example, a radio interface.

At S106, upon transmission of a data unit, a record is made of the time of transmission of the data unit. The record of the time of transmission is associated with the identifier with which the transmitted data unit was labelled. It is noted that the data unit may be transmitted with or without the identifier label, but that nonetheless, the data processing apparatus 40 is aware of the identity of the data unit being transmitted. The recorded time of transmission is associated with the identifying label. For example, said association may be as a link between linked data items, or as entries in the same row of a table or relational database. The recorded time is the earliest time at which the data unit was transmitted from the data processing apparatus 40 in its entirety, regardless of the status at the destination apparatus, that is to say, it is the time of sending from the data processing apparatus that is recorded, not the time of transmission being complete by receipt at the destination apparatus. The time may be recorded by reading a time from a system clock, and storing the reading in association with the identifying label. Alternatively, the time may be recorded by stopping a timer associated with the identifying label that was started at the time of receipt.

S106 is an optional step insofar as explicitly recording the time is concerned; it may be that the time is recorded as meeting a threshold or not, rather than the elapsed time being recorded explicitly. In embodiments, a timer for a data unit may be started at the time of receipt of the data unit, the timer being associated with the identifying label of the data unit. The timer runs for a finite period of time (the target latency period, or elapsed time, at the data processing apparatus for each data unit in the data stream), and, if the data unit assigned the identifying label associated with the timer is transmitted by the data processing apparatus while the timer runs, the timer is stopped (and in this manner the transmission time is recorded), and if said data unit is not transmitted by the data processing apparatus before the end of the finite period of time, a notification is automatically sent to the management entity, wherein the notification is sent, for example, immediately (which may be even before the data unit is transmitted). In the latter case, although the time is not recorded explicitly, the time is recorded insofar as it was greater than the finite period of time.

At S107, the records of time of receipt and time of transmission associated with the identifying label of the data unit are used to calculate an elapsed time between those two recorded times. The elapsed time may be considered to be a latency time for the data unit at the data processing apparatus. The elapsed time for the individual data unit may be compared with a target range (for example, not greater than X ms), with failure to fall within the target range triggering a notification of the elapsed time to a data communications network management entity. Alternatively, it may be that the data units are grouped with multiple consecutive data units, and that a representation of the elapsed time for the group is compared with a target range. The representation may be mean, or may be a sum of the elapsed times for the group. Again, failure to fall within the target range triggers a notification of the representation of the elapsed time for the group to the data communications network management entity. The groups may be contiguous, or may be composed on a rolling basis, so that, for example, in a sequence of data units labelled 1 to 6, with five composing a group, a first group is composed of data units 1 to 5, and a second group is composed of data units 2 to 6.

The data communications network management entity, which may be hosted by the data processing apparatus 40, may then respond to the notification. For example, in response to the notification that the target range is not being met for a particular output data stream, the management entity may instruct the data processing apparatus 40 to increase the processing power (by allocating a greater number or the same number of more powerful processor cores) to the data processing service instance generating the output data stream.

Figure 3 illustrates a data communications network of an embodiment, and also illustrates contributions to end-to-end latency. The camera 10a is exemplary of a data source 10 described above with reference to Figures 1 and 2. The two base stations, BS-1 20a, and BS-2, 20b, are exemplary of an access network 20 described above with reference to Figures 1 and 2. The edge platform 40a is exemplary of a data processing apparatus 40, described above with reference to Figures 1 and 2. The edge platform 40a is a server or group of interconnected servers that, due to their connection to the base stations BS-1 and BS-2 via a single backhaul link, may be described as "edge" in the context of the network. The edge platform 40a hosts an edge service 30a, exemplary of a data processing service 30 described above with reference to Figures 1 and 2. The edge platform 40a also hosts a latency management entity 60, which is exemplary of a data communications network management entity mentioned above with reference to Figures 1 and 2.

Five contributions to end-to-end latency are identified: T1 uplink latency over the radio interface between data source and access network; T2 uplink latency over the backhaul line (for example IP/GTP) between the access network and the data processing apparatus; T3 downlink latency over the backhaul line (for example IP/GTP) between the data processing apparatus and the access network; T4 downlink latency over the radio interface between the access network and the user equipment; T5 processing latency for a data unit (wherein a data unit may be a video frame in the example of Figure 3).

The camera 10a and UE 50 are shown attached to different base stations 20a 20b but they could also share the same point of attachment to the network. The video traffic is tunnelled back to a server (called an edge platform 40a in Figure 3 but could also be a cloud-based platform) which hosts the network based edge service 30a. For a cellular data communications network such as LTE the tunnels are based on GTP/IP. Figure 3 also shows a latency management entity 60 that is assumed to be responsible for managing the end-to-end latency for the overall service from data source to user equipment.

The latency measurements for the network links T1 to T4 are standardised in, for example, LTE and 5G (e.g. based on the time to receive acknowledgments for previous transmitted packets/frames). Such techniques may be applied to cover latency times T1 to T4 in Figure 3. Embodiments also measure the processing latency for the edge service 30a in order to provide the latency management entity 60 the information required to monitor and manage the end-to-end latency experienced by the end users. Existing network approaches assume a single flow between the originating end user node (e.g. the camera 10a) and the terminating end user node (e.g. the user equipment 50). In embodiments a single end-to-end service consists of two flows, one between the originating node 10a and the edge service 30a, which is also referred to as the input data stream, and one between the edge service 30a and the UE 50, which is also referred to as the output data stream. Embodiments track the transition of audio visual content from one flow to the other with the assignment of an identifying label to data units, in order to record and report elapsed time between receipt and transmission of data units at the edge platform 40a.

A data transmission scheme incorporating the method of Figure 1 will now be described, with reference to the data communications network architecture example of Figure 3.

**Step 1**: In the data transmission scheme the edge platform 40a is notified of the service requirement for a low latency service. The notification is expected to be from the latency management entity 60. In a virtualised service platform, the service management may also require authorisation of the service to have access to the low latency feature of the service platform. Included as part of this notification, will be a latency target (ms) for the edge service 30a and an identifier for the specific edge service instance e.g. IP Address/Port number(s) to which this latency target should be applied. This will be made available to the latency management entity 60 when the edge service 30a is deployed e.g. through a Service Requirements Description.

**Step 2**: The edge service 30a requests the edge platform 40a to establish a low latency connection to the data source 10 (e.g camera 10a in Figure 3) or provides a response to the edge platform 40a to a connection request originated from the data source 10 as part of the normal operation for establishing connections. Either in the connection request or the connection response the edge service 30a indicates to the edge platform 40a the need for a low latency service.

The audio visual data is sent from the data source 10 to the edge service 30a as a sequence of Service Data Units (SDU) (typically a video frame for a video data stream). On receipt of a complete SDU (consisting of a number of transmitted IP packets when operating over an IP based network) the edge platform 40a delivers the SDU to the edge service 30a along with a SDU identity (i.e. identifying label). The SDU identity is unique over all the contemporaneous input flows to the edge service 30a and within the set of SDUs delivered over a specified duration (td) which should be greater than the latency target. The edge platform 40a starts a timer to determine the latency for the edge service processing. If the edge service 30a supports multiple data streams the edge platform 40a will create separate timers for each of the data streams being measured and for each delivered SDU for the lifetime of the timer (td) .

**Step 3:** The edge service 30a requests a low latency connection to a data sink (e.g UE 50 in Figures 2 & 3) or responds to a connection request from the data sink 50. For these cases, either the connection request or connection response will indicate the need for a low latency service by the edge service 30a. Based on the destination IP address and port number the edge platform 40a delivers the SDUs to the data sink 50.

When requesting delivery of the SDU, the edge service 30a also includes the SDU identity. The edge platform 40a monitors all service data units delivered from the edge service 30a and based on the IP address and port number of the edge service 30a, the edge platform determines the processing delay of the edge service 30a by getting the current time from the associated timer, if the timer is still active.

If the latency is above the specified threshold or if the timer associated with the SDU has expired, the latency management entity 60 is notified (step 4 below).

**Step 4:** The edge platform 40a provides a latency warning or notification to the latency management entity (latency manager 60 in Figure 3) when the measured latency reaches a threshold value. Different schemes are possible to determine when the edge platform 30a issues a latency warning such as the average latency measured over a number of successive frames, rate of increase of the latency, or average latency for a number of input or output flows. The latency management entity 60 may take action to alleviate any latency issues. This could include restricting any new input flows, removing low priority input flows e.g. based on number of served users, and providing additional resources to the edge service 30a experiencing the high latency (scaling-up).

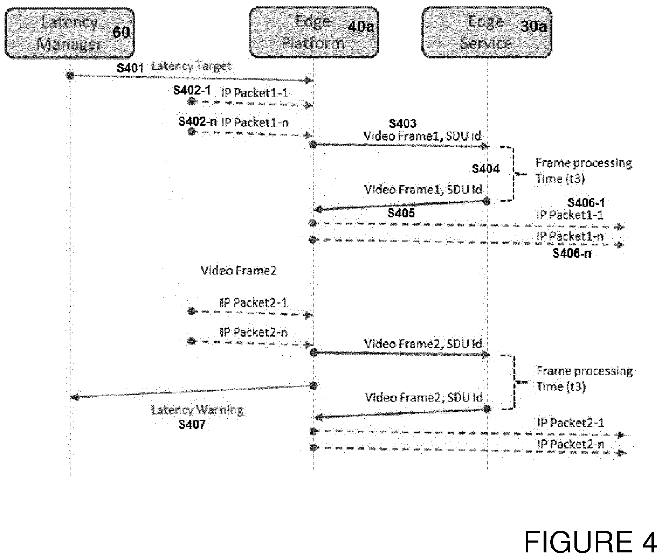

Figure 4 illustrates communication between entities in the data communications network. The latency manager 60, edge platform 40a, and edge service 30a, are illustrated, but the data communications network also includes the data sources 10, the user equipments 50, and the access network 20. At S401 the latency manager 60 notifies the edge platform 40a of a latency target for an augmented reality processing service operating on an input data stream received at the edge platform 40a over the access network 20, and to be transformed into an output data stream by the augmented reality processing service and transmitted to one or more user equipments over the access network 20.

At S402-1 a first IP packet is received over a backhaul connection between a base station to which the data source 10 is connected and the edge platform 40a. Processing by the augmented reality processing service is performed on video frame data units, which each audio visual content of n IP packets. At S402-n, the nth IP packet is received, and the first video frame data unit is complete. The edge platform 40a assigns an identifying label in the form of an SDU ID to the video frame data unit. At S403, the first complete video frame data unit is delivered by the edge platform 40a to the instance of the edge service 30a processing the input data stream, accompanied by the identifying label. At S404 the first video frame is processed by the instance of the edge service 30a, which may augment the video frame with additional information. The processing takes time t3. At S405 the new video frame, containing an augmented version, or representation of, the first video frame, is delivered to the edge platform 40a, accompanied by the identifying label.

At S406-1, a first packet of the data unit is transmitted to the UE 50. At S406-n, a second packet of the data unit is transmitted to the UE 50. A time is recorded as the transmission time for the data unit (the time of transmission of either the first or the nth packet of the data unit) along with the SDU ID. Based on the recorded reception time (either the time of receipt of all packets of the SDU at the data processing apparatus or the time of receipt of the SDU at the data processing service) associated with the same SDU ID, an elapsed time t3 for the data unit is calculated.

In Figure 4, t3 is illustrated as a time at which the SDU is present at the data processing service, from the instant it is delivered to the data processing service from the reception means of the data processing apparatus, to the instant it is transferred away from the data processing service back to the data processing apparatus. Alternative measures of elapsed time could be from: from the instant the final packet is received by the data processing apparatus so that the complete data unit is received by the data processing apparatus and may be assigned an identifying label, to either the instant the first packet is transmitted to the UE by the data processing apparatus, or the instant the final packet is transmitted to the UE by the data processing apparatus.

Once t3 is calculated, it is compared with a target range (for example, less than 5ms) for the output data stream, the target range being stored (for example, as a maximum time) by the edge platform 40a. The elapsed time t3 may be compared with the target range. Alternatively, the elapsed time is combined with elapsed times for data units in the same output data stream, and a representative value (a total, or a mean, for example) calculated for comparison with a threshold (target range). In Figure 4, t3 for video frame 1 is within the acceptable range, and hence no notification is sent to the latency manager.

Video frame 2 illustrates a particular example of how clocks and notifications may be configured in embodiments. A timer started for the SDU at delivery of the SDU to the data processing service starts running at arrival of the SDU at the edge service 30a. The timer is configured to expire after a finite period of time has past (less than or equal to the finite period of time being the target range for data unit latency at the data processing service). If the timer expires without being stopped (the stop being triggered by transmission of the data unit by the data processing apparatus) then at S407 the data processing apparatus notifies the latency manager that the target range is missed for the SDU encoding video frame 2. For example, if the latency manager receives greater than a threshold frequency (of notifications per second or notifications per video frame) of notifications, then the processing resources allocated to the instance of the processing service responsible for the output data stream are increased (more processor cores or more powerful processor cores).

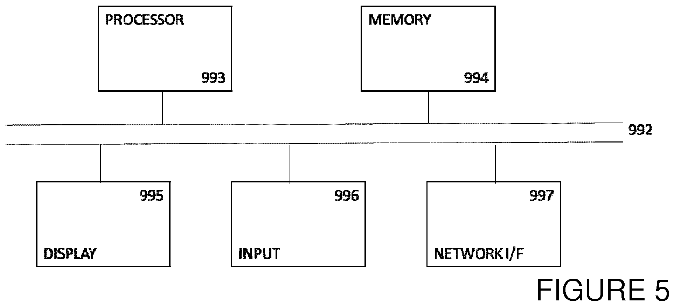

FIGURE 5 is a block diagram of a data processing apparatus, such as a computing device, which embodies the present invention, and which may be used to implement a method of an embodiment of Figure 1. The data processing apparatus comprises a processor 993, and memory, 994. Optionally, the computing device also includes a network interface 997 for communication with other computing devices, for example with other computing devices of invention embodiments. The processor may be a plurality of processor cores allocatable by a management entity to different data processing services running on the data processing apparatus.

For example, a data processing apparatus of an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement instances of the data processing service described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball etc may be included in the computing device.

The data processing service 30 of Figure 1, and the edge service 30a of Figures 2 to 4 may be a processor 993 (or plurality thereof, the number and identity of the processor cores forming part of the processor allocated to the particular service being controlled by the management entity) executing processing instructions (a program) stored on a memory 994 to transform the input data stream received from the data source 10 into an output data stream for transmission to one or more user equipments, the output data stream being an embellished/augmented/enhanced (with additional information) form of the input data stream, representing the same audio visual content. In particular, the processor 993 executes processing instructions to receive, via the network I/F, the data units comprising the input data stream from reception means of the data processing apparatus 40, and generate the output data stream, as in S104 of Figure 1. Furthermore, the processor 993 may execute processing instructions to deliver the output data stream to the data processing apparatus, or specifically to network I/F, data I/O, or transmission means thereof, to transmit to the user equipment (optionally via the access network).

Methods embodying the present invention may be carried out on a computing device such as that illustrated in Figure 5. Such a computing device need not have every component illustrated in Figure 5, and may be composed of a subset of those components. A method embodying the present invention may be carried out by a single computing device in communication with one or more data storage servers via a network.

A method embodying the present invention may be carried out by a plurality of computing devices operating in cooperation with one another. One or more of the plurality of computing devices may be a data storage server implementing at least a portion of the data processing service 30 and management entity 60.

## Claims

1. A data processing apparatus in a data communications network, the data processing apparatus being configured to:
perform a data input process, comprising:
receiving, via the data communications network, an input data stream from a data source, the input data stream comprising a first sequence of data units encoding audio visual content;
upon receipt of each data unit among the first sequence of data units, assigning an identifying label to the data unit, and recording a time of receipt of the data unit, the record of the time of receipt of the data unit being associated with the assigned identifying label;
the data processing apparatus hosting an instance of a data processing service, the data processing service being configured to generate an output data stream corresponding to the input data stream, the output data stream comprising a second sequence of data units each representing the audio visual content encoded by a corresponding data unit from the input data stream, and being labelled with the identifier of the corresponding input data unit;
the data processing apparatus being further configured to perform a data output process, comprising:
transmitting the output data stream to a user equipment via the data communication network; and
in response to an elapsed time between the recorded time of receipt of the data unit and time of transmission of the data unit for one data unit, or a representation of said elapsed time for a succession of data units in the output data stream, being outside of a target range for the output data stream, notifying a management entity of the data communications network that the target range is missed.

2. The data processing apparatus according to claim 1, wherein:
the output process further includes recording a time of transmission of the data unit, the record of the time of transmission of the data unit being associated with the identifier with which the data unit is labelled.

3. The data processing apparatus according to claim 1, wherein:
the time of receipt is recorded by starting a timer associated with the assigned identifying label, the timer being configured to expire upon running for a finite period of time, less than or equal to the finite period of time being the target range for the output data stream; and
in response to the data unit of the output stream assigned the identifying label being transmitted by the data processing apparatus before expiry of the timer, the timer is stopped, and in response to the timer expiring before it is stopped, a notification that the target range is missed for the data unit is transmitted to the management entity.

4. The data processing apparatus according to any of claims 1 to 3, wherein the data processing apparatus is configured to:
perform the data input process for each of a plurality of input data streams, concurrently;
perform the data output process for each of a plurality of output data streams, concurrently, each of the output data streams corresponding to one of the plurality of input data streams;
launch and host an instance of the data processing service for each of the plurality of output data streams.

5. The data processing apparatus according to any of claims 1 to 4, wherein
the data processing apparatus is configured to host the instance of the data processing service, or each of the instances of the data processing service, with an allocated portion of configurable computer hardware resources shared between a plurality of said instances, the portion being determined according to an instruction issued by the management entity, and
wherein the instruction from the management entity is issued as a response to the notification that the target range is missed.

6. The data processing apparatus according to any of claims 1 to 5, wherein
the management entity is hosted by the data processing apparatus.

7. The data processing apparatus according to claim 6, wherein
the management entity is configured to:
store, for the output data stream or for each output data stream, a latency target range for processing by the data processing apparatus;
to notify the data processing apparatus of the latency target range for the output data stream in advance of transmission of the output data stream to the user equipment by the data processing apparatus;
receive, from the data processing apparatus, a notification that the latency target range is missed for a data unit or for a succession of data units in the output data stream;
respond by increasing a number of processor cores, or average processing power per processor core, of the data processing apparatus computing resources allocated to the instance of the data processing service generating the output data stream.

8. The data processing apparatus according to any of claims 1 to 7, wherein
the data communication network comprises a radio interface, and
the data source or each of the data sources is in data communication with the data processing apparatus over a connection path including a radio link between the data source and a base station, and a wired or wireless link between the base station and the data processing apparatus, and
the user equipment or each of the user equipments is in data communication with the data processing apparatus over a connection path including a radio link between the user equipment and a base station, and a wired or wireless link between the base station and the data processing apparatus.

9. The data processing apparatus according to claim 5 and optionally any of the other dependent claims, wherein
each of the input data streams is the corresponding input data stream for a number of the output data streams, and
the management entity is configured, in response to a report that the target range is missed for an output data stream, to identify the input data stream corresponding to the output data stream and the number of output data streams to which the input data stream corresponds, and to determine whether there is an input data stream among the plurality of input data streams that corresponds to a number of output data streams that is lower than the identified number, and if so, to re-allocate configurable hardware resources from instances of the data processing service corresponding to the determined input data stream to instances of the data processing service corresponding to the identified data stream.

10. A data processing apparatus according to any of the preceding claims, wherein
each of the first and second sequence of data units is a sequence of service data units each composed of data received at the data processing apparatus from the data source in a plurality of data packets, and transmitted from the data processing apparatus to the user equipment in a plurality of data packets;
the time of receipt of the service data unit is recorded as the earliest time at which the service data unit is completely received at the data processing apparatus, or the earliest time at which the service data unit arrives for processing at the data processing service; and
the time of transmission of the service data unit is recorded as either the earliest time at which the service data unit is completely transmitted from the data processing apparatus, or the earliest time at which any data packet composing the service data unit is transmitted from the data processing apparatus.

11. A method in a data communications network, the method comprising:
a data input process, comprising
receiving, via the data communications network, an input data stream from a data source, the input data stream comprising a first sequence of data units encoding audio visual content;
upon receipt of each data unit among the sequence of data units, assigning an identifying label to the data unit, and recording a time of receipt of the data unit, the record of the time of receipt of the data unit being associated with the assigned identifying label;
the method further comprising:
hosting an instance of a data processing service, the data processing service being configured to generate an output data stream corresponding to the input data stream, the output data stream comprising a second sequence of data units each representing the audio visual content encoded by a corresponding data unit from the input data stream, and being labelled with the identifier of the corresponding input data unit; and
a data output process, comprising:
transmitting the output data stream to a user equipment via the data communication network; and
in response to an elapsed time between the recorded time of receipt of the data unit and time of transmission of the data unit for one data unit, or a representation of said elapsed time for a succession of data units in the output data stream, being outside of a target range for the output data stream, notifying a management entity of the data communications network that the target is missed.

12. Software which, when executed by a data processing apparatus in a data communications network, causes the data processing apparatus to perform a method according to claim 11.
